# EUROPÄISCHE PATENTSCHRIFT

(11) **EP 1 792 703 B1**
(45) Veröffentlichungstag und Bekanntmachung des Hinweises auf die Patenterteilung: **14.07.2010**
(21) Anmeldenummer: 06027045.1
(22) Anmeldetag: 04.05.2004
(51) Int. Cl.: B29C 47/06, B29C 47/20, B29C 47/70

(54) **Durch Coextrusion beschichtete Stegplatte ohne Triangeleffekt**
Multi-layer board coated by co-extrusion without triangle effect
Patin à nervures revêtu par coextrusion sans effet de triangle

(30) Priorität: 16.05.2003 DE 10322003
(43) Veröffentlichungstag der Anmeldung: 06.06.2007
(62) Teilanmeldung aus: 04731178.2
(73) Patentinhaber: Bayer Sheet Europe GmbH, 64293 Darmstadt (DE)
(72) Erfinder: Rübeck, Jakob, 64291 Darmstadt (DE)
(74) Vertreter: Breitenstein, Tilman

(56) Entgegenhaltungen:
- EP-A- 0 774 551
- EP-A1- 1 270 176
- EP-A2- 0 110 221
- US-A- 3 764 245

## Beschreibung

Die vorliegende Erfindung betrifft eine mehrschichtige coextrudierte Stegplatten, umfassend mindestens eine Schicht enthaltend einen Thermoplasten und mindestens eine Beschichtung, ohne Triangeleffekt, sowie andere Erzeugnisse welche diese mehrschichtige Stegplatte enthalten.

Stegplatten werden häufig ein- oder beidseitig mit jeweils einer Coextrusionsschicht auf einer oder beiden Außenseiten versehen, welche verschiedene Funktionalitäten erfüllen kann, bspw. kann es sich um eine UV-Schutzschicht handeln, welche die Platte vor der Schädigung (z.B. Vergilbung) durch UV-Strahlung schützt, aber auch andere Funktionalitäten wie z.B. IR-Reflexion werden auf diese Weise erfüllt.

Im folgenden wird der Stand der Technik zu mehrschichtigen Erzeugnissen zusammengefasst.

EP-A 0 110 221 offenbart Platten aus zwei Schichten Polycarbonat, wobei eine Schicht wenigstens 3 Gew.-% eines UV-Absorbers enthält. Die Herstellung dieser Platten kann gemäß EP-A 0 110 221 durch Coextrusion erfolgen.

EP-A 0 774 551 offenbart coextrudierte Stegplatten, enthaltend mindestens eine Sperrschicht gegenüber nicht-sichtbarem IR und ihre Herstellung durch Coextrusion.

EP-A1-1 270 176 offenbart ein Extrusionswerkszeug zur Extrusion von Hohlkammerprofilplatten aus thermoplastischem Kunststoff mit einem Schichtaufbau aus einer oben und unten befindlichen Schicht und einer Hohlkammerschicht, wobei die oben und unten befindliche Schicht aus einer Kunststoffschmelze hergestellt werden, die zwei Schmelzestromkanälen zugeordnet wird. Durch dieses Verfahren wird jedoch kein Einfluss auf die Gleichmäßigkeit der Schichtdicken genommen.

EP-A 0 320 632 offenbart Formkörper aus zwei Schichten aus thermoplastischem Kunststoff, bevorzugt Polycarbonat, wobei eine Schicht spezielle substituierte Benzotriazole als W-Absorber enthält. EP-A 0 320 632 offenbart auch die Herstellung dieser Formkörper durch Coextrusion.

EP-A 0 247 480 offenbart mehrschichtige Platten, in denen neben einer Schicht aus thermoplastischem Kunststoff eine Schicht aus verzweigtem Polycarbonat vorhanden ist, wobei die Schicht aus Polycarbonat spezielle substituierte Benzotriazole als UV-Absorber enthält. Die Herstellung dieser Platten durch Coextrusion wird ebenfalls offenbart.

EP-A 0 500 496 offenbart Polymerzusammensetzungen, die mit speziellen Triazinen gegen UV-Licht stabilisiert sind und deren Verwendung als Außenschicht in Mehrschichtsystemen. Als Polymere werden Polycarbonat, Polyester, Polyamide, Polyacetale, Polyphenylenoxid und Polyphenylensulfid genannt.

Alle aus dem Stand der Technik bekannten beschichteten Stegplatten zeigen jedoch das Problem des sogenannten "Triangeleffekts", d.h. bei der Coextrusion entstehen Zwickel, bestehend aus dem Material der Coextrusionsschicht, verbunden mit einer gewissen Unebenheit der Plattenoberfläche.

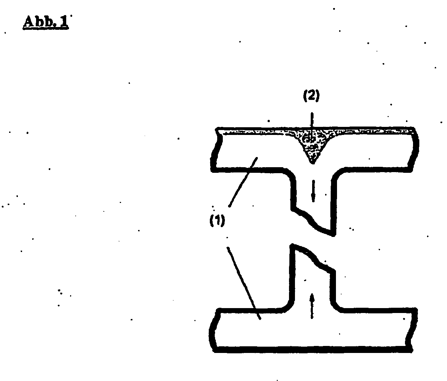

Die Abb. 1 zeigt schematisch anhand eines Schnittes durch eine Stegplatte wie es zu dieser Zwickelbildung kommt. Die Pfeile zeigen den Fluss der Polymerschmelze in der Stegform der Stegplatte (1) der in der Coextrusionsschicht (2) die Ausbildung der Zwickel hervorruft.

Ausgehend vom Stand der Technik ergibt sich daher die Aufgabe, eine gegebenenfalls mit mehreren Schichten durch Coextrusion beschichtete Stegplatte bereitzustellen, die gegenüber dem Stand der Technik keinen Triangeleffekt mehr zeigt.

Diese Aufgabe liegt der vorliegenden Erfindung zu Grunde.

Im Falle einseitig beschichteter Platten könnte man dieses Problem mittels einer geänderten Zuführung des Coextrusionsmaterials lösen, indem man die Materialzufuhr von der unbeschichteten Seite verstärkt, wodurch die Zwickelbildung an der beschichteten Seite vermieden werden kann.

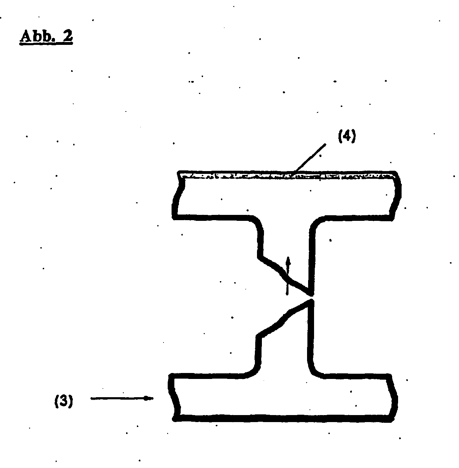

Die Abb.2 zeigt schematisch anhand eines Schnittes durch eine Stegplatte wie dieses Verfahren funktionieren könnte:

Durch einen verstärkten Polymerfluss von der nicht beschichteten Seite her kommt es zu einer Verteilung der Schmelze in Richtung der beschichteten Seite der Stegplatte (3), so dass die Coextrusionsschicht (4) zwickelfrei bleibt.

Im Falle beidseitig beschichteter Platten würde dieses Verfahren jedoch nicht mehr funktionieren. Hier würde beispielsweise durch die verstärkte Zufuhr von der Unterseite her auf der Unterseite ein verstärkter Zwickel auftreten, der Gewinn auf der einen Seite würde also durch einen Verlust auf der anderen Seite wieder aufgehoben.

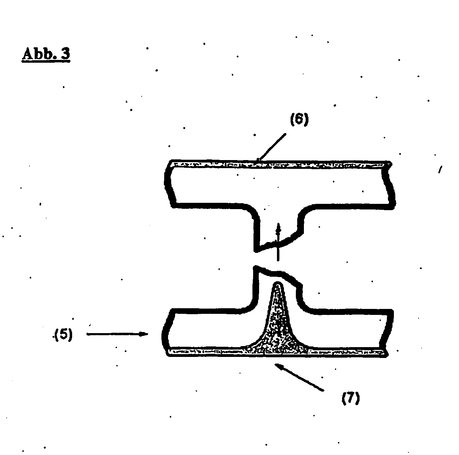

Die Abb. 3 zeigt schematisch anhand eines Schnittes durch eine Stegplatte wie diese Auswirkung aussähe (Zufuhr bei (5)): Während die obere Coextrusionsschicht 62) zwickelfrei bleibt, weist die untere Coextrusionsschicht (7) einen starken Zwickel auf.

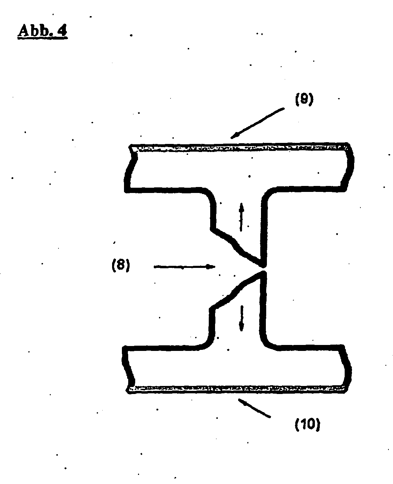

Es wurde nun überraschenderweise gefunden, dass man die Zwickelbildung bzw. den Triangeleffekt auf jeder Seite praktisch vollständig vermeiden kann, indem man die Materialflüsse während der Extrusion so modifiziert, dass man vom üblichen Materialfluss, um den Kamm der Düse herum, einen Teilfluss abzweigt, der direkt in die Mitte der Stegform der Düse geführt wird, welcher die Stege der Platten ausbildet. Gewöhnlich wird der Materialfluss durch den Kamm in eine obere und eine untere Strömung aufgeteilt, welche an den Stegformen von oben und unten zusammenfließen und so die Stege erzeugen. Dieses Abfließen von Material aus der oberen und unteren Strömung führt jedoch zu einem typischen "Abflusstrichter" welcher auf der Coextrusionsseite durch nachfließendes Coextrusionsmaterial gefüllt wird. Es entsteht ein Zwickel, s. Abb. 1. Dadurch, dass erfindungsgemäß ein Teil des Materials direkt in die Stegformen geleitet wird, wird der Materialabfluss aus der oberen und unteren Strömung verringert oder sogar verhindert, s. Abb. 4, die Trichter- und damit die Zwickelbildung, der Triangeleffekt auf beiden Seiten der Platte wird minimiert, vorzugsweise sogar vollständig vermieden. Das Verfahren ist daher zur Herstellung sowohl ein- als auch beidseitig beschichteter Stegplatten geeignet.

Die Abb. 4 zeigt schematisch anhand eines Schnittes durch eine Stegplatte wie das Verfahren funktioniert :

Durch eine zusätzliche Zuführung von Polymerschmelze bei (8), beispielsweise durch eine Bohrung in die Stegform bleiben beide Coextrusionsschichten (9) und (10) zwickelfrei.

Es ist vollkommen überraschend, dass durch eine so einfache Maßnahme ein derart lange vorhandenes Problem so erfolgreich gelöst werden konnte.

Gegenstand der vorliegenden Erfindung ist somit die durch dieses Verfahren erhältlichen zwickel-, bzw. triangeleffektfreien Platten. Diese Platten zeichnen sich durch eine besonders glatte Oberfläche und gleichmäßige, also zwickelfreie, Coextrusionsschichten aus. Eine bevorzugte Ausführungsform ist eine beidseitig beschichtete Stegplatte.

Der Kamm der Extrusionsdüse enthält zusätzlich zu den üblichen und für verschieden Zwecke benötigten Bohrungen, Schnitten und Formen Bohrungen, welche einen Teil des zufließenden Materials direkt in die Stegform führt. In einer bevorzugten Ausführungsform wird das Material dabei aus einem hinteren Bereich der Düse direkt nach vorne in die Stegform geführt.

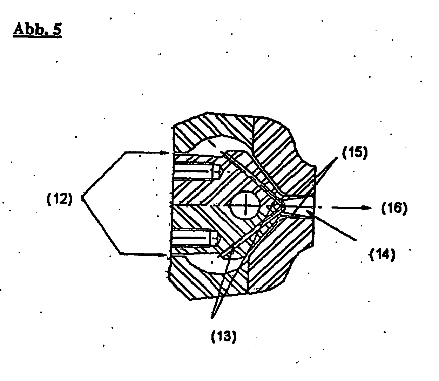

Eine mögliche Ausführungsform der Düse auf Höhe einer Stegform Abb. 5 schematisch als Querschnitt dargestellt:

Der Zufluss der Polymerschmelze erfolgt bei (12). Durch die Bohrungen (13) erfolgt die Schmelzezuführung in die Stegform (14). (13) bezeichnet die Ober- bzw. Unterseitenform, der Plattenaustritt erfolgt bei (16).

Weiterhin ist Gegenstand der vorliegenden Erfindung ein Erzeugnis, das die genannten Platten enthält. Dabei ist dieses Erzeugnis, welches bspw. die genannte mehrschichtige Stegplatte enthält, bevorzugt ausgewählt aus der Gruppe bestehend aus Verscheibungen, Gewächshaus, Wintergarten, Veranda, Carport, Bushaltestelle, Überdachung, Trennwand, Kassenhaus und Solarkollektor.

Der wesentliche Vorteil des Verfahrens liegt in der Vermeidung des Triangeleffektes, welcher sich ansonsten durch die Zwickelbildung und die damit verbundene Materialvergeudung sowie eine unebene Oberfläche der Platte negativ bemerkbar macht. Das im Zwickel vergeudete Beschichtungsmaterial besteht in der Regel aus wertvollem, mit kostspieligen Additiven versehenem Thermoplasten. Die Einsparung solchen Materials kann zu nicht unerheblichen Kostenvorteilen führen.

Das Verfahren ist zur Herstellung verschiedenster Coextrusionsschichten, prinzipiell aller denkbaren Funktionsschichten auch in Kombination (UV-Schutz und Funktionsschicht, z.B. IR-Reflexion, oben sowie UV-Schutz, unten) geeignet, besonders geeignet ist es zur Herstellung beidseitig mit UV-Schutz versehener Stegplatten.

Die erfindungsgemäßen, mehrschichtigen Erzeugnisse wie Stegplatten haben weitere Vorteile gegenüber dem Stand der Technik. Die erfindungsgemäßen mehrschichtigen Erzeugnisse wie die Stegplatte sind durch Coextrusion herstellbar. Damit ergeben sich Vorteile gegenüber eines durch Lackierung hergestellten Erzeugnisses. So verdampfen bei der Coextrusion keine Lösungsmittel, wie dies bei Lackierungen der Fall ist.

Außerdem können Lacke nicht lange lagern. Diesen Nachteil hat die Coextrusion nicht.

Außerdem erfordern Lacke eine aufwendige Technik. Zum Beispiel erfordern sie explosionsgeschützte Aggregate, das Recycling von Lösungsmitteln und damit teure Investitionen in Anlagen. Diesen Nachteil hat die Coextrusion nicht.

Eine bevorzugte Ausführungsform der vorliegenden Erfindung ist die genannte mehrschichtige Stegplatte, wobei die Basis- wie auch die Coextrusionsschicht aus unterschiedlichen oder gleichen Thermoplasten gefertigt sein können, bevorzugt basieren beide Schichten auf dem gleichen Material.

Als thermoplastische Formmassen kommen alle Formmassen infrage die bspw. Polycarbonat und/oder Polyester und/oder Polyestercarbonaten und/oder Polyestern und/oder Polymethylmethacrylaten und/oder Polystyrolen und/oder SAN und/oder Blends aus Polycarbonat und Polyestern und/oder Polymethylmethacrylaten und/oder Polystyrolen und/oder SAN enthalten.

Bevorzugt werden Formmassen enthaltend transparente Thermoplaste wie Polycarbonat und/oder Polyester sowie Blends enthaltend mindestens einen der beiden Thermoplasten. Besonders bevorzugt werden Polycarbonat und Polyester, ganz besonders bevorzugt Polycarbonat eingesetzt.

Die Herstellung dieser Thermoplaste ist dem Fachmann wohlbekannt und erfolgt nach den bekannten Verfahren.

Erfindungsgemäß sind diejenigen mehrschichtigen Erzeugnisse bevorzugt, bei denen die Coextrusionsschicht zusätzlich 1 bis 20 Gew.-% UV-Absorber enthält und 5 bis 200 µm bevorzugt 30 bis 100 µm dick ist.

Die Stegplatten können Stegdoppelplatten, Stegdreifachplatten, Stegvierfachplatten usw. sein. Die Stegplatten können auch unterschiedliche Profile wie z.B. X-Profile bzw. XX-Profile besitzen. Außerdem können die Stegplatten auch gewellte Stegplatten sein.

Eine bevorzugte Ausführungsform der vorliegenden Erfindung ist Stegplatte mit beidseitiger Coextrusionsschicht, wobei Basismaterial und die beiden Coextrusionsschichten aus Polycarbonat bestehen.

Die erfindungsgemäßen mehrschichtigen Erzeugnisse können, abhängig von der Art der verwendeten Thermoplaste und deren Additivierung, transluzent, gedeckt oder transparent sein.

In einer besonderen Ausführungsform sind die mehrschichtigen Erzeugnisse transparent.

Sowohl das Basismaterial als auch die Coextrusionsschicht(en) in den erfindungsgemäßen Stegplatten können Additive enthalten.

Die Coextrusionsschicht kann insbesondere UV-Absorber und Entformungsmittel enthalten.

Die UV-Absorber bzw. deren Mischungen sind dabei in Konzentrationen von 0-20 Gew.-% vorhanden. Bevorzugt sind dabei 0,1 bis 20 Gew.-%, besonders bevorzugt 2 bis 10 Gew.-%, ganz besonders bevorzugt 3 bis 8 Gew.-%. Falls zwei oder mehr Coextrusionsschichten vorhanden sind, kann der Anteil an UV-Absorber in diesen Schichten unterschiedlich sein.

Beispiele für UV-Absorber, die erfindungsgemäß verwendet werden können, werden im folgenden beschrieben.
a) Benzotriazol-Derivate nach Formel (I): 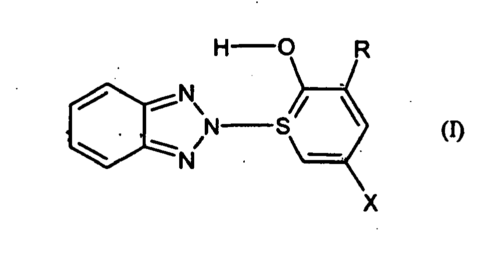 In Formel (I) sind R und X gleich oder verschieden und bedeuten H oder Alkyl oder Alkylaryl.
   Bevorzugt ist dabei Tinuvin 329 mit X = 1,1,3,3-Tetramethylbutyl und R = H
   Tinuvin 350 mit X = tert-Butyl und R = 2-Butyl
   Tinuvin 234 mit X = R = 1,1-Dimethyl-1-phenyl
b) Dimere Benzotriazol-Derivate nach Formel (II): 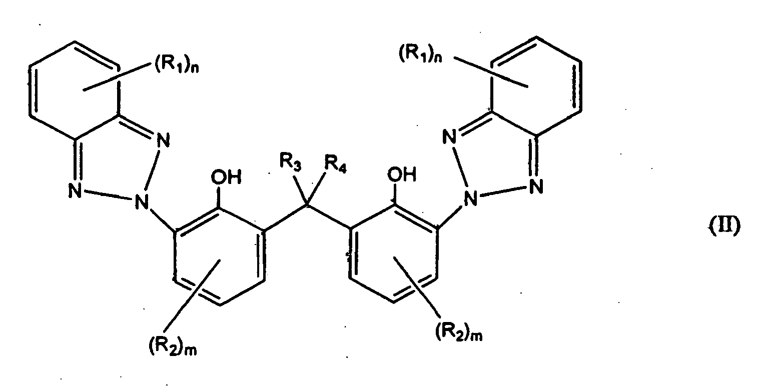 In Formel (II) sind R¹ und R² gleich oder verschieden und bedeuten H, Halogen, C₁-C₁₀-Alkyl, C₅-C₁₀-Cycloalkyl, C₇-C₁₃Aralkyl, C₆-C₁₄Aryl, -OR⁵ oder -(CO)-O-R⁵ mit R⁵ = H oder C₁-C₄-Alkyl.
   In Formel (II) sind R³ und R⁴ ebenfalls gleich oder verschieden und bedeuten H, C₁-C₄-Alkyl, C₅-C₆-Cycloalkyl, Benzyl oder C₆-C₁₄Aryl.
   In Formel (II) bedeutet m 1, 2 oder 3 und n 1, 2, 3 oder 4.
   Bevorzugt ist dabei Tinuvin 360 mit R¹ = R³ = R⁴ = H; n = 4; R² = 1,1,3,3-Tetramethylbutyl; m = 1
b1) Dimere Benzotriazol-Derivate nach Formel (III): 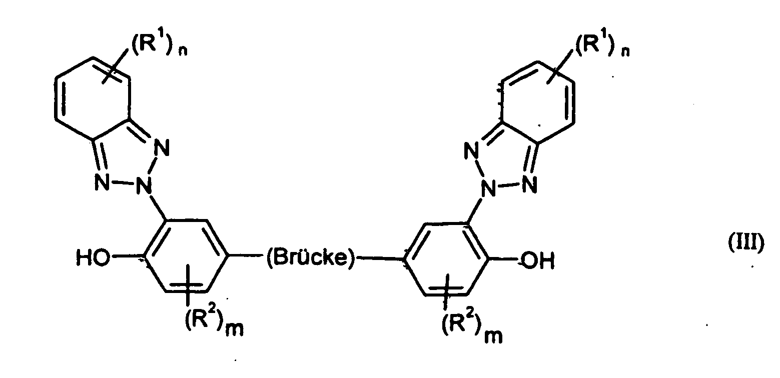 worin die Brücke 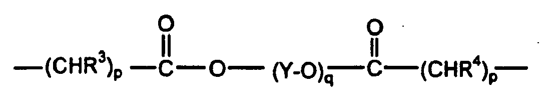 bedeutet, R¹, R², m und n die für Formel (II) genannte Bedeutung haben, und worin p eine ganze Zahl von 0 bis 3 ist, q eine ganze Zahl von 1 bis 10 ist,
   Y gleich -CH₂-CH₂-, -(CH₂)₃-, -(CH₂)₄-, -(CH₂)₅-, -(CH₂)₆-, oder CH(CH₃)-CH₂-
   ist und R³ und R⁴ die für Formel (II) genannte Bedeutung haben.
   Bevorzugt ist dabei Tinuvin 840 mit R¹ = H; n = 4; R² = tert-Butyl; m = 1; R² ist in ortho-Stellung zur OH-Gruppe angebracht; R³ = R⁴ = H; p = 2; Y = -(CH₂)₅-; q = 1
c) Triazin-Derivate nach Formel (IV): 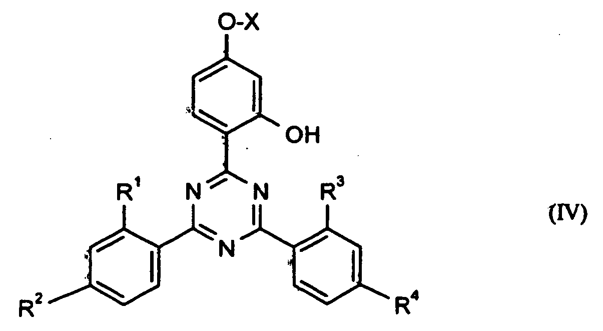 worin R¹, R², R³, R⁴ in Formel (IV) gleich oder verschieden sind und H oder Alkyl oder CN oder Halogen sind und X gleich Alkyl ist.
   Bevorzugt ist dabei Tinuvin 1577 mit R¹ = R² = R³ = R⁴ = H; X = Hexyl
   Cyasorb UV-1164 mit R¹ = R² = R³ = R⁴ = Methyl; X = Octyl
d) Triazin-Derivate der folgenden Formel (IVa) 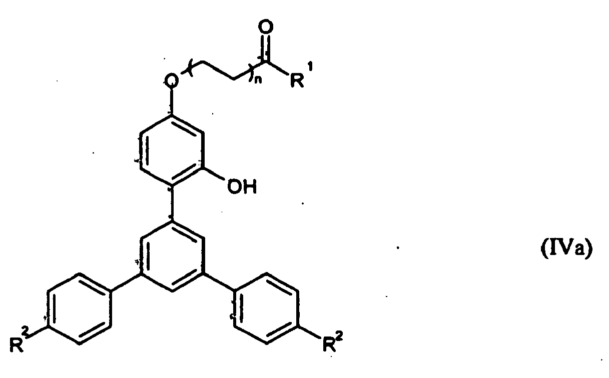 worin
   R¹ gleich C₁-Alkyl bis C₁₇-Alkyl bedeutet,
   R² gleich H oder C₁-Alkyl bis C₄-Alkyl bedeutet und
   n gleich 0 bis 20 ist.
e) Dimere Triazin-Derivate der Formel (V): 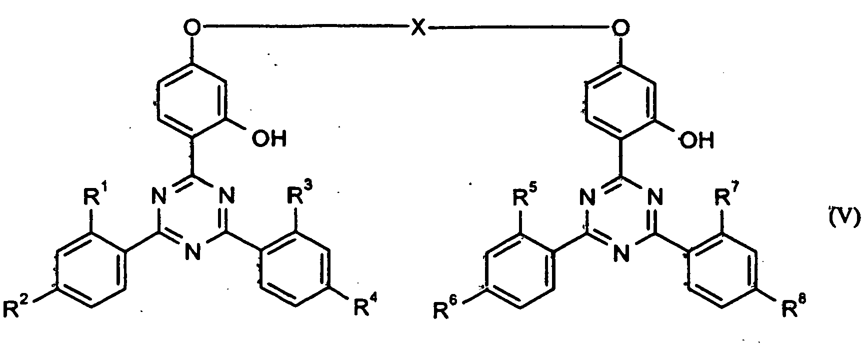 worin
   R¹, R², R³, R⁴, R⁵, R⁶, R⁷, R⁸ in Formel (V) gleich oder verschieden sein können und H oder Alkyl oder CN oder Halogen bedeuten und X gleich Alkyl oder -(CH₂CH₂-O-)n-C(=O)- ist.
f) Diarylcyanoacrylate der Formel (VI) 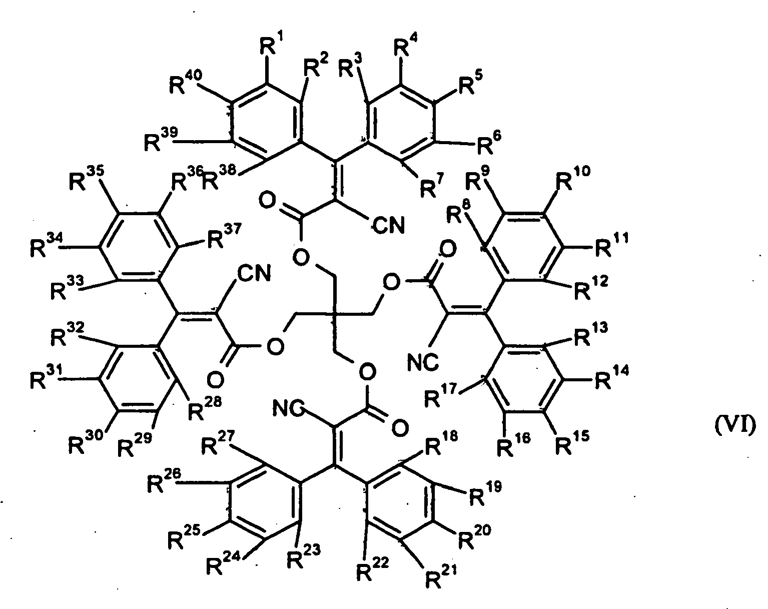 worin
   R¹ bis R⁴⁰ gleich oder verschieden sein können und H, Alkyl, CN oder Halogen bedeuten.
Bevorzugt ist dabei Uvinul 3030 mit R1 bis R40 = H

Ganz besonders bevorzugt sind die UV-Absorber ausgewählt aus der Gruppe bestehend aus Tinuvin 360, Tinuvin 1577 und Uvinul 3030.

Tinuvin 360:

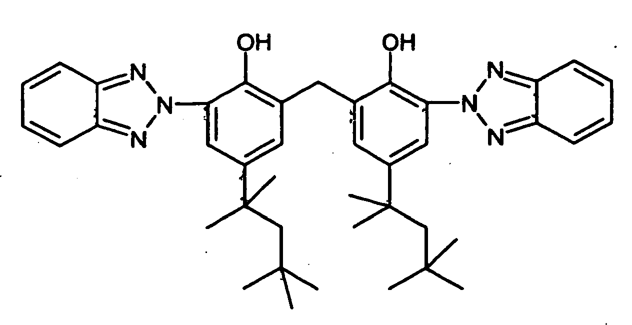

Tinuvin 1577

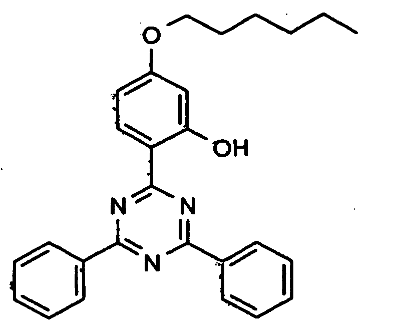

Uvinul 3030

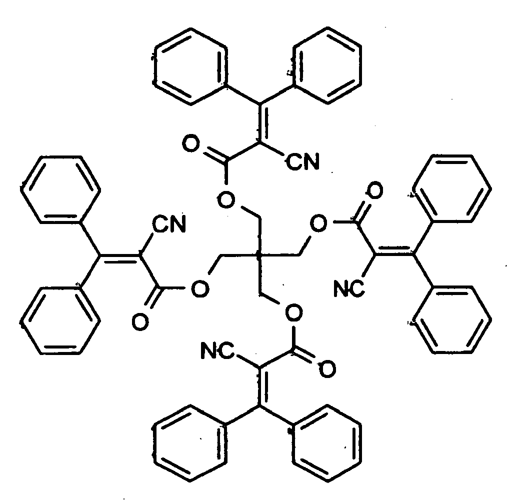

Die genannten UV-Absorber sind kommerziell erhältlich.

Zusätzlich, aber auch anstelle der UV-Absorber, können die Schichten noch andere übliche Verarbeitungshilfsmittel, insbesondere Entformungsmittel und Fließmittel sowie die in den verwendeten Polycarbonaten üblichen Additive wie Stabilisatoren insbesondere Thermostabilisatoren sowie Farbmitteln und optische Aufheller und anorganische Pigmente enthalten.

Als bevorzugte Thermoplaste für die erfindungsgemäßen mehrschichtigen Erzeugnisse sind alle bekannten Polycarbonate geeignet:

Dies sind Homopolycarbonate, Copolycarbonate und thermoplastische Polyestercarbonate.

Sie haben bevorzugt mittlere Molekulargewichte M̅_{w} von 18.000 bis 40.000, vorzugsweise von 26.000 bis 36.000 und insbesondere von 28.000 bis 35.000, ermittelt durch Gelpermeationschromatographie, geeicht an Polycarbonat.

Zur Herstellung von Polycarbonaten sei beispielhaft auf "Schnell, Chemistry and Physics of Polycarbonats, Polymer Reviews, Vol. 9, Interscience Publishers, New York, London, Sydney 1964", und auf "D.C. PREVORSEK, B.T. DEBONA and Y. KESTEN, Corporate Research Center, Allied Chemical Corporation, Morristown, New Jersey 07960, 'Synthesis of Poly(ester)carbonate Copolymers' in Journal of Polymer Science, Polymer Chemistry Edition, Vol. 19, 75-90 (1980)", und auf "D. Freitag, U. Grigo, P.R. Müller, N. Nouvertne, BAYER AG, 'Polycarbonates' in Encyclopedia of Polymer Science and Engineering, Vol. 11, Second Edition, 1988, Seiten 648-718" und schließlich auf "Dres. U. Grigo, K. Kircher und P.R. Müller 'Polycarbonate' in Becker/Braun, Kunststoff-Handbuch, Band 3/1, Polycarbonate, Polyacetale, Polyester, Celluloseester, Carl Hanser Verlag München, Wien 1992, Seiten 117-299" verwiesen.

Die Herstellung der Polycarbonate erfolgt vorzugsweise nach dem Phasengrenzflächenverfahren oder dem Schmelzumesterungsverfahren und wird im Folgenden beispielhaft an dem Phasengrenzflächenverfahren beschrieben.

Als Ausgangsverbindungen bevorzugt einzusetzende Verbindungen sind Bisphenole der allgemeinen Formel

HO-Z-OH,

worin Z ein divalenter, organischer Rest mit 6 bis 30 Kohlenstoffatomen ist, der eine oder mehrere aromatische Gruppen enthält.

Beispiele solcher Verbindungen sind Bisphenole, die zu der Gruppe der Dihydroxydiphenyle, Bis(hydroxyphenyl)alkane, Indanbisphenole, Bis(hydroxyphenyl)ether, Bis(hydroxyphenyl)-sulfone, Bis(hydroxyphenyl)ketone und 1,3 oder 1,4- Bis(hydroxyphenylpropyl)benzole gehören.

Besonders bevorzugte Bisphenole, die zu den vorgenannten Verbindungsgruppen gehören, sind Bisphenol-A, Tetraalkylbisphenol-A, 1,3-Bis-[2-(4-hydroxyphenyl)-2-propyl]benzol (Bisphenol M), 1,4-Bis-[2-(4-hydroxyphenyl)-2-propyl]benzol, 1,1-Bis-(4-hydroxyphenyl)-3,3,5-trimethylcyclohexan (Bisphenol-TMC) sowie gegebenenfalls deren Gemische.

Bevorzugt werden die erfindungsgemäß einzusetzenden Bisphenolverbindungen mit Kohlensäureverbindungen, insbesondere Phosgen, oder beim Schmelzeumesterungsprozess mit Diphenylcarbonat bzw. Dimethylcarbonat, umgesetzt.

Polyestercarbonate werden bevorzugt durch Umsetzung der bereits genannten Bisphenole, mindestens einer aromatischen Dicarbonsäure und gegebenenfalls Kohlensäureäquivalente erhalten. Geeignete aromatische Dicarbonsäuren sind beispielsweise Phthalsäure, Terephthalsäure, Isophthalsäure, 3,3'- oder 4,4'-Diphenyldicarbonsäure und Benzophenondicarbonsäuren. Ein Teil, bis zu 80 Mol.%, vorzugsweise von 20 bis 50 Mol.% der Carbonatgruppen in den Polycarbonaten können durch aromatische Dicarbonsäureester-Gruppen ersetzt sein.

Beim Phasengrenzflächenverfahren verwendete inerte organische Lösungsmittel sind beispielsweise Dichlormethan, die verschiedenen Dichlorethane und Chlorpropanverbindungen, Tetrachlormethan, Trichlormethan, Chlorbenzol und Chlortoluol, vorzugsweise werden Chlorbenzol oder Dichlormethan bzw. Gemische aus Dichlormethan und Chlorbenzol eingesetzt.

Die Phasengrenzflächenreaktion kann durch Katalysatoren wie tertiäre Amine, insbesondere N-Alkylpiperidine oder Oniumsalze beschleunigt werden. Bevorzugt werden Tributylamin, Triethylamin und N-Ethylpiperidin verwendet. Im Falle des Schmelzeumesterungsprozesses werden bevorzugt die in DE-A 4238123 genannten Katalysatoren verwendet.

Die Polycarbonate können durch den Einsatz geringer Mengen Verzweiger bewusst und kontrolliert verzweigt werden. Einige geeignete Verzweiger sind: Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-benzol; 1,1,1-Tri-(4-hydroxyphenyl)-ethan; Tri-(4-hydroxyphenyl)-phenylmethan; 2,2-Bis-[4,4-bis-(4-hydroxyphenyl)-cyclohexyl]-propan; 2,4-Bis-(4-hydroxyphenyl-isopropyl)-phenol; 2,6-Bis-(2-hydroxy-5'-methyl-benzyl)-4-methylphenol; 2-(4-Hydroxyphenyl)-2-(2,4-dihydroxyphenyl)-propan; Hexa-(4-(4-hydroxyphenyl-isopropyl)-phenyl)-orthoterephthalsäureester; Tetra-(4-hydroxyphenyl)-methan; Tetra-(4-(4-hydroxyphenyl-isopropyl)-phenoxy)-methan; 1,3,5-Tris-[2-(4-hydroxyphenyl)-2-propyl]benzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4"-dihydroxytriphenyl)-methyl)-benzol und insbesondere; 1,1,1-Tri-(4-hydroxyphenyl)-ethan und Bis-(3-methyl-4-hydroxyphenyl)-2-oxo-2,3-dihydroindol.

Die gegebenenfalls mitzuverwendenden 0,05 bis 2 mol-%, bezogen auf eingesetzte Diphenole, an Verzweigern bzw. Mischungen der Verzweigern, können mit den Diphenolen zusammen eingesetzt werden aber auch in einem späteren Stadium der Synthese zugegeben werden.

Als Kettenabbrecher werden bevorzugt Phenole wie Phenol, Alkylphenole wie Kresol und 4-tert.-Butylphenol, Chlorphenol, Bromphenol, Cumylphenol oder deren Mischungen in Mengen von 1-20 mol-% bevorzugt 2-10 mol-% je mol Bisphenol verwendet. Bevorzugt sind Phenol, 4-tert.-Butylphenol bzw. Cumylphenol.

Kettenabbrecher und Verzweiger können getrennt oder aber auch zusammen mit dem Bisphenol den Synthesen zugesetzt werden.

Die Herstellung der Polycarbonate nach dem Schmelzumesterungsverfahren ist in DE-A 42 38 123 beispielhaft beschrieben.

Erfindungsgemäß bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan und die Copolycarbonate auf Basis der beiden Monomere Bisphenol A und 4,4'-Dihydroxydiphenyl (DOD).

Das Homopolycarbonat auf Basis von Bisphenol A ist besonders bevorzugt.

Das verwendete Polymer kann Stabilisatoren enthalten. Geeignete Stabilisatoren sind beispielsweise Phosphine, Phosphite oder Si enthaltende Stabilisatoren und weitere in EP-A 0 500 496 beschriebene Verbindungen. Beispielhaft seien Triphenylphosphite, Diphenylalkylphosphite, Phenyldialkylphosphite, Tris-(nonylphenyl)phosphit, Tetrakis-(2,4-di-tert.-butylphenyl)-4,4'-biphenylen-diphosponit und Triarylphosphit genannt. Besonders bevorzugt sind Triphenylphosphin und Tris-(2,4-di-tert.-butylphenyl)phosphit.

Diese Stabilisatoren können in allen Schichten der erfindungsgemäßen Stegplatte vorhanden sein. Also sowohl in der Basis- als auch in der oder in den Coextrusionsschichten. In jeder Schicht können unterschiedliche Additive bzw. Konzentrationen an Additiven vorhanden sein.

Ferner kann die erfindungsgemäße Stegplatte 0.01 bis 0.5 Gew.-% der Ester oder Teilester von ein- bis sechswertigen Alkoholen, insbesondere des Glycerins, des Pentaerythrits oder von Guerbetalkoholen enthalten.

Einwertige Alkohole sind beispielsweise Stearylalkohol, Palmitylalkohol und Guerbetalkohole.

Ein zweiwertiger Alkohol ist beispielsweise Glycol.

Ein dreiwertiger Alkohol ist beispielsweise Glycerin.

Vierwertige Alkohole sind beispielsweise Pentaerythrit und Mesoerythrit.

Fünfwertige Alkohole sind beispielsweise Arabit, Ribit und Xylit.

Sechswertige Alkohole sind beispielsweise Mannit, Glucit (Sorbit) und Dulcit.

Die Ester sind bevorzugt die Monoester, Diester, Triester, Tetraester, Pentaester und Hexaester oder deren Mischungen, insbesondere statistische Mischungen, aus gesättigten, aliphatischen C₁₀ bis C₃₆-Monocarbonsäuren und gegebenenfalls Hydroxy-Monocarbonsäuren, vorzugsweise mit gesättigten, aliphatischen C₁₄ bis C₃₂-Monocarbonsäuren und gegebenenfalls Hydroxy-Monocarbonsäuren.

Die kommerziell erhältlichen Fettsäureester, insbesondere des Pentaerythrits und des Glycerins, können herstellungsbedingt <60% unterschiedlicher Teilester enthalten.

Gesättigte, aliphatische Monocarbonsäuren mit 10 bis 36 C-Atomen sind beispielsweise Caprinsäure, Laurinsäure, Myristinsäure, Palmitinsäure, Stearinsäure, Hydroxystearinsäure, Arachinsäure, Behensäure, Lignocerinsäure, Cerotinsäure und Montansäuren.

Bevorzugte gesättigte, aliphatische Monocarbonsäuren mit 14 bis 22 C-Atomen sind beispielsweise Myristinsäure, Palmitinsäure, Stearinsäure, Hydroxystearinsäure, Arachinsäure und Behensäure.

Besonders bevorzugt sind gesättigte, aliphatische Monocarbonsäuren wie Palmitinsäure, Stearinsäure und Hydroxystearinsäure.

Die gesättigten, aliphatischen C₁₀ bis C₃₆-Carbonsäuren und die Fettsäureester sind als solche entweder literaturbekannt oder nach literaturbekannten Verfahren herstellbar. Beispiele für Pentaerythritfettsäureester sind die der besonders bevorzugten, vorstehend genannten Monocarbonsäuren.

Besonders bevorzugt sind Ester des Pentaerythrits und des Glycerins mit Stearinsäure und Palmitinsäure.

Besonders bevorzugt sind auch Ester von Guerbetalkoholen und des Glycerins mit Stearinsäure und Palmitinsäure und gegebenenfalls Hydroxystearinsäure.

Diese Ester können sowohl in der Basis als auch in der oder in den Coextrusionsschichten vorhanden sein. In jeder Schicht können unterschiedliche Additive bzw. Konzentrationen vorhanden sein.

Die erfindungsgemäßen Stegplatten können Antistatika enthalten.

Beispiele für Antistatika sind kationaktive Verbindungen, beispielsweise quartäre Ammonium-, Phosphonium- oder Sulfoniumsalze, anionaktive Verbindungen, beispielsweise Alkylsulfonate, Alkylsulfate, Alkylphosphate, Carboxylate in Form von Alkali- oder Erdalkalimetallsalzen, nichtionogene Verbindungen, beispielsweise Polyethylenglykolester, Polyethylenglykolether, Fettsäureester, ethoxylierte Fettamine. Bevorzugte Antistatika sind nichtionogene Verbindungen.

Diese Antistatika können sowohl in der Basis als auch in der oder in den Coextrusionsschichten vorhanden sein. In jeder Schicht können unterschiedliche Additive bzw. Konzentrationen vorhanden sein. Sie werden bevorzugt in der oder in den Coex-Schichten verwendet.

Die erfindungsgemäßen Stegplatten können organische Farbstoffe, anorganische Farbpigmente, Fluoreszenzfarbstoffe und besonders bevorzugt optische Aufheller enthalten.

Diese Farbmittel können sowohl in der Basis als auch in der oder in den Coextrusionsschichten vorhanden sein. In jeder Schicht können unterschiedliche Additive bzw. Konzentrationen vorhanden sein.

Alle für die Herstellung der erfindungsgemäßen Stegplatte verwandten Formmassen, deren Einsatzstoffe und Lösungsmittel können aus ihrer Herstellung und Lagerung mit entsprechenden Verunreinigungen kontaminiert sein, wobei es das Ziel ist, mit so sauberen Ausgangsstoffen wie möglich zu arbeiten.

Das Vermischen der einzelnen Bestandteile kann in bekannter Weise sowohl sukzessive als auch simultan erfolgen und zwar sowohl bei Raumtemperatur als auch bei erhöhter Temperatur.

Die Einarbeitung der Zusätze in die Formmassen für die erfindungsgemäßen Stegplatten insbesondere der UV-Absorber und weiterer vorgenannter Additive erfolgt bevorzugt in bekannter Weise durch Vermischen von Polymergranulat mit den Zusätzen bei Temperaturen von etwa 200 bis 330°C in üblichen Aggregaten wie Innenknetern, Einschneckenextrudern und Doppelwellenextrudern beispielsweise durch Schmelzecompoundierung oder Schmelzeextrusion oder durch Vermischen der Lösungen des Polymers mit Lösungen der Additive und anschließende Verdampfung der Lösungsmittel in bekannter Weise. Der Anteil der Additive in der Formmasse kann in weiten Grenzen variiert werden und richtet sich nach den gewünschten Eigenschaften der Formmasse. Der Gesamtanteil der Additive in der Formmasse beträgt bevorzugt etwa bis zu 20 Gew.-%, vorzugsweise 0,2 bis 12 Gew.-%, bezogen auf das Gewicht der Formmasse.

Die Einarbeitung der UV-Absorber in die Formmassen kann beispielsweise auch geschehen durch Vermischen von Lösungen der UV-Absorber und gegebenenfalls weiterer vorgenannter Additive mit Lösungen der Kunststoffe in geeigneten organischen Lösungsmitteln wie CH₂Cl₂, Halogenalkanen, Halogenaromaten, Chlorbenzol und Xylolen. Die Substanzgemische werden dann bevorzugt in bekannter Weise via Extrusion homogenisiert; die Lösungsgemische werden bevorzugt in bekannter Weise durch Ausdampfen des Lösungsmittels und anschließender Extrusion entfernt, beispielsweise compoundiert.

Die Bearbeitung der erfindungsgemäßen Stegplatten z.B. durch Tiefziehen oder durch Oberflächenbearbeitungen, wie z.B. Ausrüstung mit Kratzfestlacken, wasserspreitenden Schichten und ähnliches sind möglich und die durch diese Verfahren hergestellten Erzeugnisse sind ebenfalls Gegenstand der vorliegenden Erfindung.

Die Coextrusion als solche ist literaturbekannt (siehe beispielsweise EP-A 0 110 221 und EP-A 0 110 238). Im vorliegenden Fall wird vorzugsweise wie folgt verfahren: An einem Coextrusionsadapter sind Extruder zur Erzeugung der Kernschicht und Deckschicht(en) angeschlossen. Der Adapter ist so konstruiert, dass die die Deckschicht(en) formende Schmelze als dünne Schicht haftend auf die Schmelze der Kernschicht aufgebracht werden. Der so erzeugte mehrschichtige Schmelzestrang wird dann in der anschließend angeschlossenen Düse in die gewünschte Form (Stegplatte) gebracht. Anschließend wird in bekannter Weise mittels Vakuumkalibrierung (Stegplatte) die Schmelze unter kontrollierten Bedingungen abgekühlt und anschließend abgelängt. Gegebenenfalls kann nach der Kalibrierung ein Temperofen zur Eliminierung von Spannungen angebracht werden. Anstelle des vor der Düse angebrachten Adapters kann auch die Düse selbst so ausgelegt sein, dass dort die Zusammenführung der Schmelzen erfolgt.

Im Verfahren wird dabei das geschilderte Verfahren unter Verwendung einer wie oben beschrieben abgewandelten Düse, also mit Bohrung zur direkten Materialzuführung in die Stegform, durchgeführt. Dementsprechend ebenfalls Gegenstand der vorliegenden Anmeldung ist die Verwendung einer erfindungsgemäßen Düse zur Herstellung einer zwickelfreien, beschichteten Stegplatte.

Die Erfindung wird durch die folgenden Beispiele weiter erläutert, ohne auf diese beschränkt zu sein. Die erfindungsgemäßen Beispiele geben lediglich bevorzugte Ausführungsformen der vorliegenden Erfindung wider.

Die verwendeten Maschinen und Apparate zur Herstellung von mehrschichtigen Massivplatten werden im Folgenden beschrieben. Sie umfassen:
- den Hauptextruder mit einer Schnecke der Länge 25 bis36 D und einem Durchmesser von 70 mm bis 200 mm mit Entgasung und ohne Entgasung
- einen oder mehrere Coextruder zum Aufbringen der Deckschichten mit einer Schnecke der Länge 25 bis 36 D, wobei D den Durchmesser des Extruders bezeichnet, und einem Durchmesser D von 25 mm bis 70 mm, mit und ohne Entgasung
- einen Co-Ex Adapter
- eine spezielle Stegplattendüse
- einen Kalibrator
- eine Abzugseinrichtung
- eine Rollenbahn
- eine Ablängvorrichtung (Säge)
- einen Ablagetisch.

Das Polycarbonat-Granulat des Basismaterials wurde dem Fülltrichter des Hauptextruders zugeführt, das Coextrusionsmaterial dem des Coextruders. Im jeweiligen Plastifiziersystem Zylinder/Schnecke erfolgte das Aufschmelzen und Fördern des jeweiligen Materials. Beide Materialschmelzen wurden in dem Coex-Adapter und der Stegplattendüse zusammengeführt und bildeten nach Verlassen der Düse und Abkühlen im Kalibrator einen Verbund. Die weiteren Einrichtungen dienten dem Transport, Ablängen und Ablegen der extrudierten Platten.

Die erhaltenen Platten wurden anschließend visuell begutachtet.

Es wurden Stegplatten der Dimensionen:
Stegdoppelplatte 10 mm dick, 11 mm Stegabstand, 2100 mm breit, 1,7 kg/m² SN2 10/11-2100 1,7kg/m²
Stegdoppelplatte 10 mm dick, 11 mm Stegabstand, 2100 mm breit, 2,0 kg/m² SS2 10/11-2100 2,0 kg/m²
Stegdoppelplatte 8 mm dick, 11 mm Stegabstand, 2100 mm breit, 1,5 kg/m² SN2 8/11-2100 1,5 kg/m²
Stegdoppelplatte 8 mm dick, 11 mm Stegabstand, 2100 mm breit, 1,7 kg/m² SS2 8/11-2100 1,7 kg/m²
aus Polycarbonat gefertigt, diese enthielten augenscheinlich keine Zwickel mehr und wiesen dementsprechend keinen Triangeleffekt mehr auf.

Die folgenden Polycarbonate wurden in diesen Versuchen als Coextrusion eingesetzt:
- Makrolon^{®} 1243, Ein verzweigtes Bisphenol A Polycarbonat mit 0,3 Mol % Isatinbiskresol als Verzweiger und einem M̅_{w} von 29 234 sowie einer relativen Lösungsviskosität von 0,5g/100 ml,
- Makrolon^{®} 3103, ein lineares Bisphenol A Polycarbonat mit M̅_{w} von 31 887 sowie einer relativen Lösungsviskosität von 0,5g/100 ml
   als Basismaterialien sowie
- DP1-1816, ebenfalls ein lineares Bisphenol A Polycarbonat mit M̅_{w} von 33 560 und UV-Schutz-additiven.

## Patentansprüche

1. Mehrschichtige Stegplatte, hergestellt durch Coextrusion von Coextrusionsschicht(en) (9, 10) mit einem oder mehreren Coextrudem **dadurch gekennzeichnet,**
**dass** sie über gleichmäßige Coextrusionsschicht(en) (9, 10) verfügt, und
**dass** sie erhältlich ist durch Extrusion einer Basisschicht mit einem Hauptextruder, wobei von dem Materialfluss des Basismaterials ein Teilfluss abgezweigt wird, der direkt in die Mitte der Stegform geführt wird (8), welcher die Stege ausbildet.

2. Stegplatte nach Anspruch 1, **dadurch gekennzeichnet, dass** sie einen transparenten Thermoplasten enthält.

3. Stegplatte gemäß Anspruch 1, **dadurch gekennzeichnet, dass** alle Schichten auf dem gleichen Thermoplasten basieren.

4. Stegplatte gemäß Anspruch 1, **dadurch gekennzeichnet, dass** sie aus Polycarbonat besteht.

5. Stegplatte gemäß Anspruch 1, **dadurch gekennzeichnet, dass** die Coextrusionsschicht(en) (9, 10) als UV-Schutz dienen.

6. Produkt enthaltend eine Stegplatte gemäß Anspruch 1 bis 5.

7. Produkt gemäß Anspruch 6, wobei das Produkt ausgewählt ist aus der Gruppe bestehend aus Verscheibung, Gewächshaus, Wintergarten, Veranda, Carport, Bushaltestelle, Überdachung, Trennwand, Kassenhaus und Solarkollektor.

8. Stegplatte nach Anspruch 1, **dadurch gekennzeichnet, dass** sie eine beidseitig beschichtete Stegplatte ist.

9. Stegplatte nach Anspruch 8, **dadurch gekennzeichnet, dass** das Basismaterial und die beiden Coextrusionsschichten (9, 10) aus Polycarbonat bestehen.

10. Stegplatte nach Anspruch 1, **dadurch gekennzeichnet, dass** sie eine Stegdoppelplatte, Stegdreifachplatte oder Stegvierfachplatte ist.

## Claims

1. Multi-layer multi-wall sheet produced by the coextrusion of coextrusion layer(s) (9, 10) with one or more coextruders, **characterized in that** it has uniform coextrusion layer(s) (9, 10) and **in that** it is obtainable by the extrusion of a base layer with a main extruder, a partial flow being tapped from the material flow of base material, said partial flow being fed directly into the middle of the rib mould (8) that forms the ribs of the sheets.

2. Multi-wall sheet according to Claim 1, **characterized in that** it contains a transparent thermoplastic.

3. Multi-wall sheet according to Claim 1, **characterized in that** all the layers are based on the same thermoplastic

4. Multi-wall sheet according to Claim 1, **characterized in that** it consists of polycarbonate.

5. Multi-wall sheet according to Claim 1, **characterized in that** the coextrusion layer(s) (9, 10) provide UV protection

6. Product containing a multi-wall sheet according to Claims 1 to 5.

7. Product according to Claim 6 which is selected from the group comprising glazing, greenhouses, winter gardens, verandas, car ports, bus shelters, canopies, partitions, cash kiosks and solar collectors

8. Multi-wall sheet according to Claim 1, **characterized in that** it is coated on both sides

9. Multi-wall sheet according to Claim 8, **characterized in that** the base material and the two coextrusion layers (9, 10) consist of polycarbonate

10. Multi-wall sheet according to Claim 1, **characterized in that** it is a twin-wall sheet, triple-wall sheet or quadruple-wall sheet

## Revendications

1. Plaque nervurée à plusieurs couches préparée par co-extrusion d'une(de) couche(s) de co-extrusion (9, 10) avec une ou plusieurs co-extrudeuses, **caractérisée**
**en ce qu'**elle fournit une(des) couche(s) de co-extrusion uniforme(s) (9, 10), et
**en ce qu'**elle est obtenue par extrusion d'une couche de base avec une extrudeuse principale,
dans laquelle un flux partiel du flux de matière du matériau de base est dérivé, lequel est conduit directement au milieu du moule de la nervure (8), lequel forme les nervures.

2. Plaque nervurée selon la revendication 1, **caractérisée en ce qu'**elle contient une matière thermoplastique transparente.

3. Plaque nervurée selon la revendication 1, **caractérisée en ce que** toutes les couches sont à base de la même matière thermoplastique.

4. Plaque nervurée selon la revendication 1, **caractérisée en ce qu'**elle est constituée de polycarbonate.

5. Plaque nervurée selon la revendication 1, **caractérisée en ce que** la(les) couche(s) de co-extrusion (9, 10) servent de protection aux UV.

6. Produit contenant une plaque nervurée selon la revendication 1 à 5.

7. Produit selon la revendication 6, dans lequel le produit est choisi dans le groupe constitué des vitrages, des serres, des jardins d'hiver, des vérandas, des toits de protection pour automobiles, des arrêts de bus, des toits, des parois de séparation, des guérites et des collecteurs solaires.

8. Plaque nervurée selon la revendication 1, **caractérisée en ce qu'**elle est une plaque nervurée revêtue sur les deux côtés.

9. Plaque nervurée selon la revendication 8, **caractérisée en ce que** le matériau de base et les deux couches de co-extrusion (9, 10) sont constituées de polycarbonate.

10. Plaque nervurée selon la revendication 1, **caractérisée en ce qu'**elle est une plaque nervurée double, une plaque nervurée triple ou une plaque nervurée quadruple.
